# EUROPEAN PATENT APPLICATION

(11) **EP 4 307 274 A1**
(43) Date of publication of application: **17.01.2024**
(21) Application number: 22184176.0
(22) Date of filing: 11.07.2022
(51) Int. Cl.: G08G 1/16, G08G 1/056, B60W 30/095, B60W 50/14, G01C 21/36, G08G 1/09, G08G 1/0962, G08G 1/0965, G08G 1/0967

(54) **METHOD FOR DETECTING DRIVING AGAINST A STATUTORY DIRECTION OF TRAVEL**

(71) Applicant: VOLKSWAGEN AG, 38440 Wolfsburg (DE)
(72) Inventor: Peters, Steffen, 14793 Buckautal (DE)

(57) **Abstract**

The invention relates to a method for detecting driving of a vehicle (10) against the statutory direction of travel, wherein the vehicle (10) communicates with further vehicles (14) by means of Car2X communication (12).

In a method for detecting the driving of a vehicle (10) against the statutory driving direction, in which the disadvantages from the prior art are avoided it is intended that from further vehicles (14) communicating with the vehicle (10) information about the direction of travel of the respective further vehicles (14) is transmitted at least to the vehicle (10), that on reaching a predetermined number of direction of travel information from further vehicles (14) having an opposite relative direction of travel compared to the vehicle (10), it is assumed that the vehicle (10) is moving against the statutory direction of travel.

## Description

The invention relates to a method for detecting the driving of a vehicle against the statutory direction of travel, wherein the vehicle communicates with further vehicles by means of Car2X communication.

In addition, the invention relates to a vehicle, with at least one communication device for communicating with further vehicles by means of Car2X communication, with at least one navigation device and with at least one device for recognizing traffic signs.

In the prior art, various options are known for detecting wrong-way driving of a vehicle. Most of these options are limited to detecting wrong-way driving from external sources, such as drivers of other vehicles or cameras installed on roadways.

DE 2008 046 875 B3 discloses a method for preventing driving against the statutory direction of travel. For this purpose, a recognition device is provided in a vehicle that recognizes traffic signs. In addition, a navigation device is provided which checks whether driving in the wrong direction is taking place. If driving in the wrong direction is detected, the vehicle is prevented from continuing.

DE 10 205 213 517 A1 shows a method for warning other road users when a vehicle is driving the wrong way. For this purpose, it is envisaged that the wrong-way driving of a vehicle is detected via sensors or a navigation system. The information about a detected wrong-way trip is communicated to other road users via a communication link.

DE 10 2013 009 543 A1 discloses a method for identifying a wrong-way driver. A device automatically detects whether a vehicle is not moving in the statutory direction of travel. This information can be transmitted to other road users by means of Car2X communication.

A disadvantage of the aforementioned methods of detecting a wrong-way trip is that the wrong-way trip is not always reliably detected. Furthermore, other road users can often only be warned about a wrong-way driver with a long time delay.

Therefore invention is based on the objective of specifying a method for detecting the driving of a vehicle against the prescribed direction of travel as well as a vehicle, in which the disadvantages from the prior art are avoided.

In the present invention, this objective is solved by the features of claim 1 first of all in that information about the direction of travel of the respective further vehicles is transmitted to the vehicle by further vehicles communicating with the vehicle at least in that, when a predetermined number of direction of travel information items from further vehicles which have an opposite relative direction of travel compared with the vehicle is reached, it is assumed that the vehicle is moving in the opposite direction to the statutory direction of travel.

Car2X data is a technology in which vehicles communicate with their environment, i.e. "X". In a special Car2Car variant of the Car2X system, vehicles can also communicate with each other. With Car2X, transmission is possible in both directions. Consequently, the vehicle can communicate with the environment and/or the environment can communicate with the vehicle. Preferably, sensor data is transmitted during communication. It is conceivable that Car2X communication is implemented via a WLAN connection.

The direction of travel means the current orientation of the vehicle on the route. In addition, the distance traveled by the vehicle or other vehicles, especially on a road, can also be taken into account. The longitudinal movement on the road, but also the transverse movement of the vehicle on the road is taken into account. Consequently, the travel distance is not only the distance traveled on a road, for example, but also the lateral movement, i.e. the position of the vehicle in relation to the entire width of the road or the actual provided width of the road. In construction sites, for example, there are often lane narrowings, so that driving is only possible in a certain area of the entire theoretically available width of the lane.

The direction of travel information can be the current direction of travel. However, it is also conceivable that an average driving direction of a predetermined past time and/or driving distance is transmitted. Also conceivable is the transmission of random information about the current direction of travel in a defined past time period or a past travel distance. In this way, the accuracy and in particular the reliability of the method can be increased. If only the current direction of travel is transmitted, this information could be interpreted incorrectly if, for example, the course of the route is winding, or an on-ramp and/or an exit fits into the course of a highway in such a way that the current direction information could lead to an interpretation that incorrectly assumes or excludes incorrect driving.

Further vehicles are, in particular, other road users who are in the vicinity of the vehicle. Preferably, these are vehicles moving in the statutory direction of travel in the lane occupied by the vehicle. However, it is also conceivable that other vehicles are part of the oncoming traffic, for example.

A first advantage of the invention is that a detection of wrong-way driving of the vehicle can be carried out depending on the environment of the vehicle. It is to be expected that the vehicle will move in the wrong direction if it is registered that the majority of vehicles in the vicinity are moving in a different direction on the same travel path.

Further preferred embodiments of the invention result from the other features mentioned in the subclaims.

In a first embodiment of the method according to the invention, it is provided that when the direction of travel information of three further vehicles, preferably of five further vehicles, which have an opposite relative direction of travel compared to the vehicle is reached, it is assumed that the vehicle is moving in the opposite direction to the statutory direction of travel. In this way, a prompt detection of the wrong-way driving can take place, while at the same time a representative number of further vehicles can be registered. If the number of other vehicles to be registered is too large, detection of the wrong-way driving is delayed. If the number of registered vehicles is too small, the probability is too great that the further vehicle will falsely emit signals indicating that the vehicle is not moving in the statutory direction of travel.

In a further advantageous embodiment of the method according to the invention, it is provided that a movement against a statutory direction of travel is assumed only if the vehicle is on a highway. On a highway, structural separations are normally provided to separate two directions of travel from each other. In this way, when a wrong-way trip is detected, it can be assumed that the registered other vehicles whose direction of travel is different from the vehicle's direction of travel are on the same side of the highway as the vehicle. Due to the structural separation, the oncoming traffic is further away from the vehicle, so that if the range of the Car2X communication is sufficiently sensitive, it can be assumed that the oncoming traffic is not registered.

Additionally, in a further embodiment of the method, it may be provided that the vehicle and/or the further vehicles communicate with the infrastructure by means of Car2X communication. Thus, the accuracy of the method can be increased. The infrastructure, albeit stationary, is also appropriately aligned with the roadway. If information about the orientation of individual elements of the infrastructure is known, conclusions can be drawn about whether the vehicle is passing these elements of the infrastructure in the correct direction.

To increase reliability, in a further embodiment of the method according to the invention, it can be provided that the vehicle has a device for detecting traffic signs and that it is assumed that the vehicle is moving in the opposite direction to the statutory direction of travel if a traffic sign is detected by which further travel in the existing direction of travel is prohibited. The traffic sign recognition can additionally serve as an indicator that the vehicle is moving in the wrong direction. The triggering traffic signs can be no entry and/or no through traffic signs. It is also conceivable to detect one-way street signs or the like.

In addition or alternatively, in a further advantageous embodiment of the method according to the invention, it can be provided that the vehicle comprises a navigation device and that it is assumed that the vehicle is moving in the opposite direction to the statutory direction of travel if it is detected by the navigation device that the vehicle is driving up an on-ramp of a federal road or a highway in the wrong direction of approach. In this way, wrong-way driving can be detected at an early stage. Wrong-way driving is detected before the vehicle enters a federal road or a highway.

In a further embodiment of the method, it can be assumed that the vehicle is moving in the opposite direction to the statutory direction of travel if the vehicle is moving at a speed greater than a previously defined maximum speed. It is conceivable that the driver of the vehicle realizes early on that he or she is traveling in the wrong direction on the exit ramp rather than the entrance ramp of the highway or interstate. If the driver's speed is low, for example less than 25 km/h, it can be assumed that the driver has realized his mistake and will turn or stop. Consequently, below the previously determined speed, it need not be assumed that the vehicle is moving against the statutory direction of travel.

In a further embodiment of the method according to the invention, it is provided that it is assumed that the vehicle is moving in the opposite direction to the statutory direction of travel if the vehicle initially slows down and a change in direction of 180° is registered. If the vehicle is already on a highway or federal road, it is still possible for the driver of the vehicle to turn the vehicle around and continue driving in the opposite direction. With a corresponding guideline speed on a federal highway or freeway, it can be assumed that the driver will initially slow down the vehicle in order to be able to initiate a 180° turning maneuver. If this happens, it can be assumed that the vehicle will continue to move in the wrong direction.

In order to warn other road users of a registered wrong turn, a particularly preferred embodiment of the method provides that other road users, in particular the other vehicles, are informed by means of Car2X communication that the vehicle is moving against the statutory direction of travel. By means of the Car2X communication, further road users can be warned immediately upon detection of the wrong-way movement, so that the time delay from detection of the wrong-way movement to the warning is minimal.

In order to reach as many road users as possible, an additional embodiment of the invention provides that the notification is communicated by means of a DENM message. The Decentralized Environmental Notification Message (DENM) is a message about location and traffic data, as well as traffic situations and danger points. With Car2X communication, this information can be exchanged between road users. By using the 3GPP standard in which the Decentralized Environmental Notification Message system is defined, the message can be transmitted to as many compatible road users and/or infrastructure as possible.

Furthermore, in another embodiment of the method, it is envisaged that the message to the other vehicles contains information about the current position of the vehicle. Since the vehicle is moving in the wrong direction, it is important for the other road users to be able to locate the vehicle at an early stage. By transmitting position information, it is possible to detect where the vehicle is at an early stage.

In order to warn other road users for a sufficiently long time, a further embodiment of the invention provides that the message is transmitted for as long as the vehicle is moving in the opposite direction to the statutory direction of travel. In this way, other road users receive information about a wrong-way driver until the situation has normalized and there is no longer any danger. As the vehicle continuously moves in the wrong direction, position information, for example, quickly becomes outdated. By maintaining the transmission of the message with, for example, current position information, other road users receive updated information about the position of the vehicle.

In order to increase the radius of the transmitted message, in a further advantageous embodiment of the method according to the invention, it is provided that the further vehicles forward the message of the vehicle to by means of Car2X communication to receivers that are configured to transmit and receive Car2X messages, meaning that these receivers comprise at least one transceiver configured to send and receive messages (signals) via a wireless communication and at least one control unit that is configured to control the transceiver to send and receive messages (signals) via the wireless communication that are configured and designed to transmit and receive Car2X messages. Particularly preferred, the vehicle and/or the receivers are configured to perform Car2X communication via WLAN (WLANp), as for example defined in the IEEE 802.11 (or ITS-G5), and/or via a mobile communication network, as for example defined by the 3GPP mobile communication standards.

In this way, not only is the radius of the transmitted message increased, but other road users are also warned in good time. The larger the radius of the broadcast message, the sooner road users, i.e. road users who are further away from the vehicle, know that there is a wrong-way driver on their route.

The aforementioned task is also solved by a vehicle having at least one communication device for communicating with further vehicles by means of Car2X communication, having at least one navigation device and having at least one device for recognizing traffic signs, characterized. It is envisaged that the vehicle is set up to carry out an aforementioned method. The previous explanations concerning the method according to the invention apply accordingly also to the vehicle according to the invention.

In a first embodiment of the vehicle according to the invention, it is provided that the device for recognizing traffic signs comprises a multifunction camera. By means of the multifunction camera, which on the one hand serves to detect traffic signs, other tasks can also be performed. It is conceivable that other sensor devices are also supported by the multifunction camera. Thus, the required installation space within the vehicle can be minimized.

The various embodiments of the invention mentioned in this application can be combined with advantage, unless otherwise specified in the individual case.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of the various embodiments, those skilled in the art will recognize that the embodiments herein can be practiced with modification within the spirit and scope of the appended claims.

Although the embodiments herein are described with various specific embodiments, it will be obvious for a person skilled in the art to practice the invention with modifications. However, all such modifications are deemed to be within the scope of the claims.

It is also to be understood that the following claims are intended to cover all of the generic and specific features of the embodiments described herein and all the statements of the scope of the embodiments which as a matter of language might be said to fall therebetween.

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

A processing device configured to implement a software component to perform an operation A may include a processor programmed to run software or execute instructions to control the processor to perform operation A. In addition, a processing device configured to implement a software component to perform an operation A, an operation B, and an operation C may have various configurations, such as, for example, a processor configured to implement a software component to perform operations A, B, and C; a first processor configured to implement a software component to perform operation A, and a second processor configured to implement a software component to perform operations B and C; a first processor configured to implement a software component to perform operations A and B, and a second processor configured to implement a software component to perform operation C; a first processor configured to implement a software component to perform operation A, a second processor configured to implement a software component to perform operation B, and a third processor configured to implement a software component to perform operation C; a first processor configured to implement a software component to perform operations A, B, and C, and a second processor configured to implement a software component to perform operations A, B, and C, or any other configuration of one or more processors each implementing one or more of operations A, B, and C. Although these examples refer to three operations A, B, C, the number of operations that may implemented is not limited to three, but may be any number of operations required to achieve a desired result or perform a desired task.

Software or instructions for controlling a processing device to implement a software component may include a computer program, a piece of code, an instruction, or some combination thereof, for independently or collectively instructing or configuring the processing device to perform one or more desired operations. The software or instructions may include machine code that may be directly executed by the processing device, such as machine code produced by a compiler, and/or higher-level code that may be executed by the processing device using an interpreter. The software or instructions and any associated data, data files, and data structures may be embodied permanently or temporarily in any type of machine, component, physical or virtual equipment, computer storage medium or device, or a propagated signal wave capable of providing instructions or data to or being interpreted by the processing device. The software or instructions and any associated data, data files, and data structures also may be distributed over network-coupled computer systems so that the software or instructions and any associated data, data files, and data structures are stored and executed in a distributed fashion.

The invention is explained below in embodiment examples with reference to the associated drawings. They show:
- Figure 1: a schematic representation of the implementation of an embodiment of a method according to the invention,
- Figure 2: a schematic representation of the implementation of a further example of the process according to the invention, and
- Figure 3: a schematic block representation of the execution of individual steps of an embodiment example of a method according to the invention.

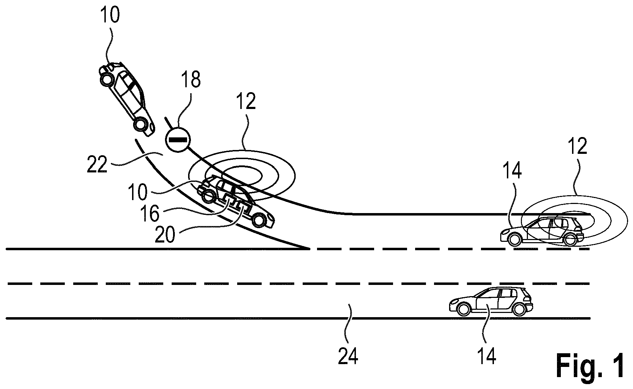

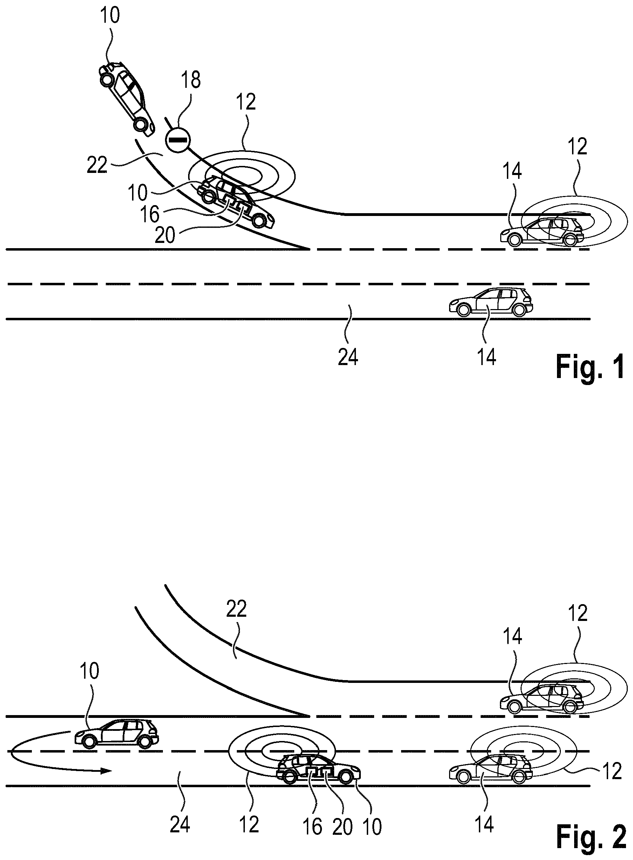

Figure 1 shows the detection of wrong-way driving of a vehicle 10. By means of various indicators, it can be detected that the vehicle 10 is moving against the statutory direction of travel. The vehicle 10 can then use Car2X communication 12 to transmit the detection of wrong-way driving to other vehicles 14. In the present embodiment, the vehicle 10 has a device 16 for detecting traffic signs 18.

The device 16 detects a traffic sign 18 indicating that entry is prohibited. Such a traffic sign serves as an indicator that the vehicle 10 is moving in the wrong direction after passing the traffic sign 18. Consequently, a Car2X message 12 is subsequently sent out to be received by the other vehicles 14.

Furthermore, it is provided that the transmitted Car2X messages 14 contain information about the direction of travel or about the relative movement with respect to the route of travel. This information is transmitted by both the vehicle 10 and the further vehicles 14. Another indicator of a wrong-way trip is when at least three Car2X messages 12 are received by the vehicle 10 from further vehicles 14 whose direction of travel is opposite relative to the direction of travel of the vehicle 10. In this case, it can be assumed that the further vehicles 14 are traveling in the statutory direction.

In addition, the vehicle 10 has a navigation device 20 that can obtain information about the direction of roads on a route based on satellite data. Another indicator for detecting wrong-way driving is that it is detected by the navigation device 20 when the vehicle 10 enters an on-ramp 22 of a highway 24 in the wrong direction. Accordingly, also in this case, a message is transmitted to the other vehicles 14 by means of Car2X communication 12.

Figure 2 shows an embodiment example of the method according to the invention, which is applied when the vehicle 10 is already moving on a highway. It is conceivable that the driver of the vehicle 10 turns the vehicle 10 on the highway 24. To do this, the driver of the vehicle 10 must first slow down the vehicle 10 and then perform a 180° change in direction. If such behavior is registered, for example by the navigation device 20 or by corresponding sensors on the vehicle, this is an indicator that the vehicle 10 is subsequently moving in the opposite direction to the statutory direction of travel on the highway 24. Also in this embodiment example, messages are sent by means of Car2X communication 12 to warn other road users, in particular the other vehicles 14.

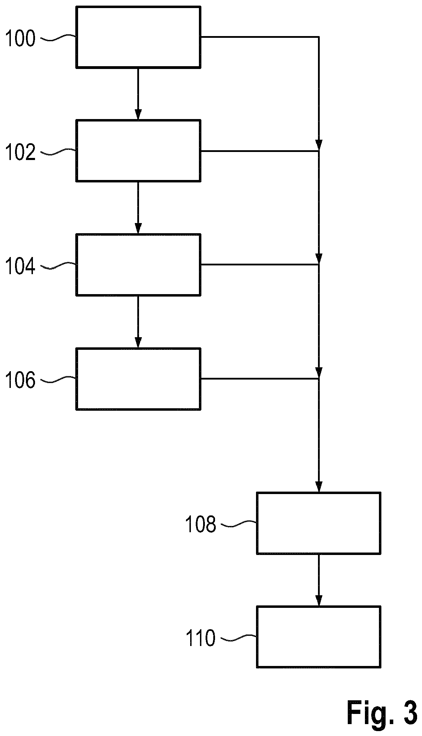

Figure 3 shows individual steps that are carried out in an exemplary embodiment. In the respective steps, a check is made to determine whether an indicator of wrong-way driving is present. In step 100, information about the direction of travel of the respective further vehicles 14 is transmitted to the vehicle 10 by further vehicles 14 communicating with the vehicle 10. Thereby, it is checked whether a predetermined number of driving direction information is reached from further vehicles 14 having an opposite relative driving direction compared to the vehicle 10. If this is the case, it is assumed that the vehicle is moving in the opposite direction to the statutory direction of travel.

In step 102, traffic signs 18 are checked by the traffic sign detection device 16. It is assumed that the vehicle 10 is moving against the statutory direction of travel when a traffic sign 18 is detected by which further travel in the existing direction of travel is prohibited. The triggering traffic signs 18 may be no entry and/or no through signs. It is also conceivable that one-way street signs or the like.

In step 104, the navigation device 20 detects whether the vehicle 10 is entering an on-ramp of a state road or a highway 24 in the wrong direction of entry. In this way, the wrong-way driving can be detected at an early stage. Wrong way driving is detected before the vehicle 10 enters a federal road or a highway. Wrong-way driving is only assumed if the vehicle 10 is moving at a speed greater than a previously defined maximum speed. Conceivably, the driver of the vehicle 10 may realize early on that he or she is traveling in the wrong direction on the exit ramp rather than the on-ramp 22 of the highway 24 or interstate. If the speed of the vehicle 10 is low, for example less than 25 km/h, it can be assumed that the driver has realized his mistake and will turn or stop. Consequently, below the previously determined speed, it need not be assumed that the vehicle 10 is moving against the statutory direction of travel.

In step 106, it is assumed that the vehicle 10 is moving against the prescribed direction of travel if the vehicle 10 initially slows down and a change in direction of 180° is registered. If the vehicle 10 is already on a highway 24 or state highway, it is still possible for the driver of the vehicle 10 to turn the vehicle 10 around and continue traveling in the opposite direction. Given an appropriate guideline speed on a highway 24, it can be assumed that the driver will initially slow the vehicle 10 in order to be able to initiate a 180° turning maneuver. If this occurs, it can be assumed that the vehicle 10 will continue to move in the wrong direction.

If no wrong direction is detected in any of the steps 100 to 106, obviously no wrong direction driving is present. If any of these steps imply as an indicator that the vehicle 10 is driving in the wrong direction, a warning is sent out to additional vehicles 14 in step 108 using Car2X communication 12. Through the Car2X communication, further road users can be warned immediately upon detection of the wrong-way driving, so that the time delay from detection of the wrong-way driving to the warning is minimal. The Car2X message is sent out as a DENM message, so that a message according to a known standard can be transmitted to as many further vehicles 12 compatible with this standard as possible.

The message to the further vehicles 13 contains information about the current position of the vehicle 10 and is sent as long as the vehicle 10 is moving against the statutory direction of travel. In this way, other road users receive information about a wrong-way driver until the situation has normalized and there is no longer any danger. Since the vehicle is continuously moving in the wrong direction, position information, for example, quickly becomes outdated. By maintaining transmission of the message with, for example, current position information of the vehicle 10, other road users receive updated information about the position of the vehicle.

In step 110, the other vehicles 14 forward the message from the vehicle 10 to compatible receivers using Car2X communication 12. In this way, not only is the radius of the transmitted message increased, but other road users also receive early warning. The larger the radius of the disseminated message, the sooner road users further away from the vehicle 10 will know that there is a wrong-way driver on their route.

**List of reference signs**
- 10: Vehicle
- 12: Car2X communication
- 14: Further vehicle
- 16: Device for recognizing traffic signs
- 18: Traffic sign
- 20: Navigation device
- 22: Ramp
- 24: Highway

## Claims

1. Method for detecting the driving of a vehicle (10) against the statutory direction of travel, wherein the vehicle (10) communicates with further vehicles (14) by means of Car2X communication (12), **characterized in that** further vehicles (14) communicating with the vehicle (10) provide information about the direction of travel of the respective further vehicles (14) to at least the vehicle (10), **in that**, when a predetermined number of pieces of information about the direction of travel of further vehicles (14) which have an opposite relative direction of travel in comparison with the vehicle (10) are reached, it is assumed that the vehicle (10) is moving in the opposite direction to the statutory direction of travel.

2. Method according to claim 1, **characterized in that** when the direction of travel information of three further vehicles (14), preferably of five further vehicles (14), which have an opposite relative direction of travel compared to the vehicle (10) is reached, it is assumed that the vehicle (10) is moving in the opposite direction to the statutory direction of travel.

3. Method according to claim 1 or 2, **characterized in that** a movement against a statutory direction of travel is assumed only when the vehicle (10) is on a highway.

4. Method according to one of claims 1 to 3, **characterized in that** the vehicle (10) and/or the further vehicles (14) communicate with the infrastructure by means of Car2X communication (14).

5. Method according to one of the claims 1 to 4, **characterized in that** the vehicle (10) has a device (16) for recognizing traffic signs (18) and **in that** it is assumed that the vehicle (10) is moving in the opposite direction to the statutory direction of travel if a traffic sign is recognized by which further travel in the existing direction of travel is prohibited.

6. Method according to one of the claims 1 to 5, **characterized in that** the vehicle (10) comprises a navigation device (20) and **in that** it is assumed that the vehicle (10) is moving in the opposite direction to the statutory direction of travel if it is detected by the navigation device (20) that the vehicle (10) is driving onto an on-ramp (20) of a federal road or a freeway (24) in the wrong direction of approach.

7. Method according to claim 6, **characterized in that** it is assumed that the vehicle (10) is moving against the statutory direction of travel if the vehicle (10) is moving at a speed that is greater than a previously defined maximum speed.

8. Method according to one of claims 1 to 7, **characterized in that** it is assumed that the vehicle (10) is moving in the opposite direction to the statutory direction of travel when the vehicle (10) initially slows down and a change in direction of 180° is registered.

9. Method according to one of claims 1 to 8, **characterized in that** other road users, in particular the other vehicles (14), are informed by means of Car2X communication (12) that the vehicle (10) is moving against the statutory direction of travel.

10. Method according to claim 9, **characterized in that** the notification is communicated by means of DENM message.

11. Method according to claim 9 or 10, **characterized in that** the communication to the further vehicles (14) contains information about the current position of the vehicle (10).

12. Method according to any one of claims 9 to 11, **characterized in that** the message is transmitted as long as the vehicle (10) is moving against the statutory direction of travel.

13. Method according to any of claims 9 to 12, **characterized in that** the further vehicles (14) forward the message of the vehicle (10) by means of Car2X communication (12) to receivers that are configured to transmit and receive Car2X messages.

14. Vehicle (10), having at least one communication device for communicating with further vehicles (14) by means of Car2X communication (12), having at least one navigation device (20) and having at least one device (16) for recognizing traffic signs (18), **characterized in that** the vehicle (10) is set up to carry out a method according to one of claims 1 to 13.

15. Vehicle (10) according to claim 14, **characterized in that** the device (16) for recognizing traffic signs (18) comprises a multifunction camera.
